# FASCICULE DE BREVET EUROPEEN

(11) **EP 1 405 567 B1**
(45) Date de publication et mention de la délivrance du brevet: **07.12.2005**
(21) Numéro de dépôt: 03292419.3
(22) Date de dépôt: 01.10.2003
(51) Int. Cl.: A23G 3/00

(54) **Procédé de fabrication de pâte de nougat**
Verfahren zur Herstellung von Nougatmasse
Process for the production of nougat mass

(30) Priorité: 03.10.2002 FR 0212228
(43) Date de publication de la demande: 07.04.2004
(73) Titulaire: Dumas, 34120 Nezignan-L'Eveque (FR)
(72) Inventeur: Hedri, Hassine, 34980 Saint Gely du Fesc (FR)
(74) Mandataire: Cabinet HERRBURGER

(56) Documents cités:
- EP-A- 0 202 575
- EP-A- 0 513 462
- CH-A- 644 252
- FR-A- 2 675 344
- FR-A- 2 722 952

## Description

La présente invention concerne un procédé de fabrication de pâte de nougat.

Le nougat constitue une friandise traditionnelle qui est apparue en Provence dès le Moyen Age et a conquis l'Ardèche et la région de Montélimar au XVI^{ème} siècle

Cette friandise qui se présente sous la forme de bâtonnets classiquement constituée d'une part d'une pâte de base de consistance dure ou tendre renfermant des matières sucrantes et du blanc d'oeufs et d'autre part d'une garniture renfermant des fruits en particulier des fruits secs (amandes, noisettes, pistaches, ...) entiers ou en morceaux.

On peut distinguer différents types de nougats (tendres ou durs, noirs ou blancs, ...) composés d'ingrédients variables en fonction de leur origine (Provence, Ardèche, ...).

Parmi ces différents nougats, le nougat de Montélimar jouit d'une bonne réputation.

Pour pouvoir bénéficier de la dénomination « Nougat de Montélimar », un nougat doit avoir une composition satisfaisant à un code d'usage réglementaire.

La dénomination « Nougat de Montélimar » est en effet réservée à des nougats :
- dont la pâte de base est aérée au moyen d'albumine d'oeufs de poules et/ ou de blancs d'oeufs de poules,
- dont la garniture représente au minimum 30 % en poids du produit fini et est composée d'amandes douces d'amandiers émondées et grillées et éventuellement de pistaches, à l'exclusion de tout autre ingrédient, et
- dont les matières sucrantes doivent contenir au minimum 25 % en poids de miel, l'emploi d'un renforçateur d'arôme de miel étant interdit.

Les fabricants de nougat aspirent à recycler et à valoriser leurs chutes.

Dans ce but, ils proposent, des pâtes de nougat qui sont fabriquées par un procédé consistant schématiquement :
- dans une première étape à concasser des morceaux de nougat correspondant à des chutes de fabrication de façon à obtenir des brisures de nougat, et
- dans une seconde étape à broyer très finement ces brisures de nougat avec des amandes ou des noisettes de façon à obtenir la pâte de nougat.

Un procédé basé sur ce principe est, par example, décrit dans EP0 513 462.

Ces pâtes de nougat sont ensuite vendues à des industriels spécialisés en particulier dans la fabrication de glaces et de produits surgelés qui les incorporent à des préparations diverses.

Les pâtes de nougat actuellement proposées sur le marché ne donnent toutefois pas entière satisfaction tant d'un point de vue économique que d'un point de vue purement gustatif.

En effet, leur procédé de fabrication est long et coûteux en énergie compte tenu notamment de l'obligation d'utiliser un matériel de broyage particulier et d'ajouter des ingrédients, tels que des amandes ou des noisettes en cours de broyage, voire de reconstituer la formule à la fin de celui-ci.

De plus, ce procédé ne peut pas être directement appliqué à tous les types de nougat, en particulier à des nougats très riches en miel tels que des chutes de nougat de Montélimar compte tenu du caractère mou et collant du miel qui entraîne un recollage immédiat des brisures.

En outre les pâtes de nougat ont souvent une granulométrie peu homogène et des propriétés organoleptiques contestables du fait d'une note exagérément forte en noisettes ou en amandes couvrant partiellement la note miel qui est très appréciée par les consommateurs.

La présente invention a pour objet de remédier à ces inconvénients en proposant un procédé permettant la valorisation des chutes de tous les types de nougat dur, y compris le nougat de Montélimar, dont la mise en oeuvre soit nettement plus rapide que celle des procédés traditionnels, et permettant d'obtenir une pâte de nougat ayant des qualités gustatives donnant toutes satisfactions aux consommateurs, tout en respectant l'intégralité des normes HACCP en vigueur.

Selon l'invention, ce procédé est caractérisé par la mise en oeuvre des étapes suivantes :
- on introduit du nougat dur éventuellement additionné d'amandes blanchies dans une enceinte de broyage à température ambiante ;
- on soumet ce nougat à un prébroyage à température essentiellement constante jusqu'à obtention d'un mélange ayant une granulométrie homogène ;
- on laisse la température de l'enceinte atteindre naturellement 40 à 50°C tout en poursuivant le broyage de façon à obtenir une pâte de nougat ;
- on refroidit alors rapidement l'enceinte à une température de l'ordre de 2 à 5°C ;
- on poursuit le broyage à basse température jusqu'à l'obtention d'une pâte ayant la granulométrie souhaitée ; et
- on laisse la température de l'enceinte remonter jusqu'à une valeur proche de l'ambiante tout en poursuivant le broyage.

Il est à noter que l'enceinte de broyage peut avantageusement être constituée par une enceinte en acier inoxydable équipée d'un broyeur à couteaux en respect des normes alimentaires françaises et européennes et de nature en particulier à respecter les règles sanitaires et les chartes de qualité, et notamment les normes HACCP.

Selon l'invention, le traitement dans l'enceinte de broyage peut être mis en oeuvre en moins de 30 minutes et de préférence en environ 25 minutes, ce qui permet d'obtenir une économie d'énergie notable par rapport aux procédés traditionnels de fabrication de pâte de nougat.

Le caractère particulièrement avantageux du procédé conforme à l'invention est principalement lié à l'étape de refroidissement rapide de l'enceinte de broyage de 40/50°C à 2/5°C et au maintien de cette fourchette de température durant la dernière phase de broyage.

Ce refroidissement est effectué en environ 2 minutes sans interruption du broyage qui est poursuivi à basse température pendant environ 5 minutes avant la remontée de l'enceinte de broyage à température ambiante.

Ce traitement rapide à basse température permet en effet d'obtenir à partir de toutes les chutes de nougat dur des pâtes de nougat ayant une granulométrie et des propriétés organoleptiques satisfaisantes liées notamment à la préservation des arômes du miel.

Selon l'invention, après l'étape de remise de la pâte de nougat à température ambiante, on peut, si nécessaire transférer celle-ci dans un broyeur à cylindres où on lui fait subir une étape d'affinage de façon à réduire sa granulométrie, de 200 µ à environ 50 µ.

Les caractéristiques du procédé de fabrication de pâte de nougat qui fait l'objet de l'invention seront décrites plus en détail en se référant aux dessins annexés dans lesquels
- la figure 1 est une vue schématique d'une installation permettant la mise en oeuvre de ce procédé ;
- la figure 2 est une courbe représentative des variations de température à l'intérieur de l'enceinte de broyage.

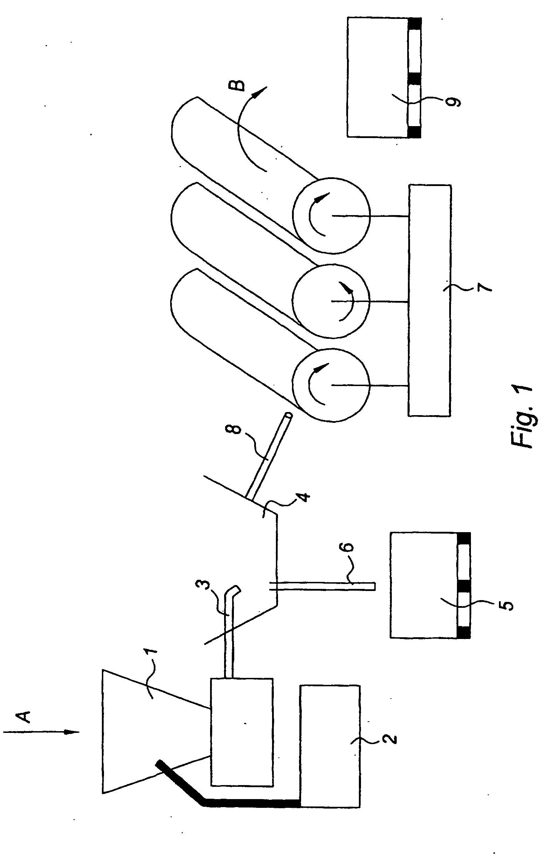

Selon la figure 1, l'installation est constituée par une enceinte de broyage 1 reliée à un générateur de frigories réglable 2.

L'enceinte de broyage 1 est équipée d'une ouverture d'introduction du nougat et le cas échéant des amandes blanchies selon la flèche A ainsi que d'une tubulure de sortie 3 permettant de transférer la pâte obtenue à l'issue du broyage dans l'enceinte 1 dans un réservoir de stockage intermédiaire 4.

A partir de ce réservoir de stockage intermédiaire, cette pâte de nougat peut être transférée soit par une tubulure 6, dans des organes 5 permettant son conditionnement selon la spécification souhaitée soit par une tubulure 8 dans des organes d'affinage constitués par une broyeuse à cylindres 7 de façon à réduire sa granulométrie.

A la sortie du broyeur à cylindres 7 la pâte de nougat affinée est transférée selon la flèche B dans des organes 9 permettant là encore son conditionnement selon la spécification souhaitée.

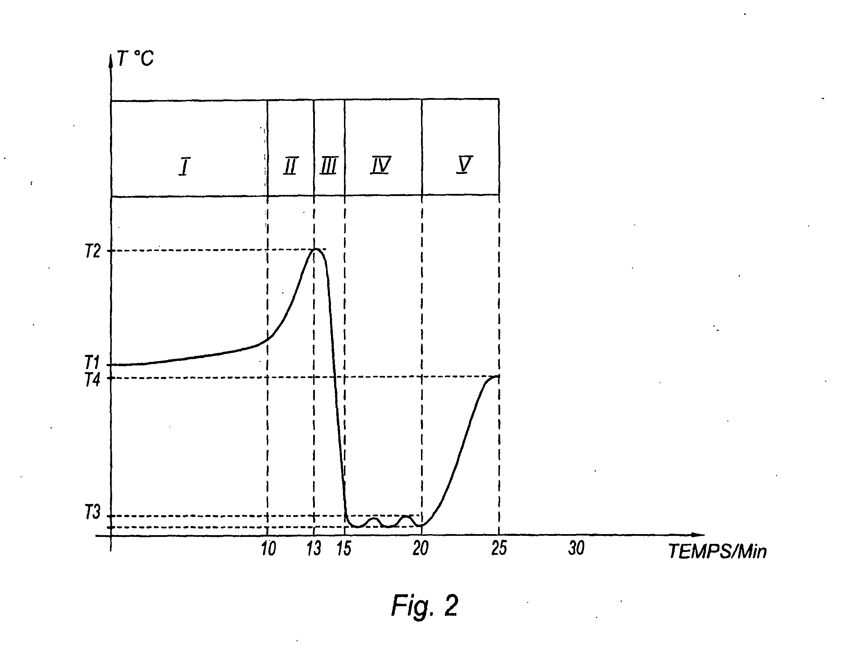

Selon la figure 2, le nougat dur éventuellement additionné d'amandes blanchies est introduit dans l'enceinte de broyage à la température ambiante T1 et est soumis à un prébroyage à température essentiellement constante pendant environ 10 minutes (étape I).

La température interne de l'enceinte de broyage atteint alors naturellement une valeur T2 de l'ordre de 40 à 50°C tandis que le broyage est poursuivi pendant un laps de temps de l'ordre de 3 minutes (étape II).

La température interne de l'enceinte de broyage est alors rapidement abaissée jusqu'à une température T3 de l'ordre de 2 à 5°C en environ 2 minutes, ce sans interrompre le broyage (étape III) par injection contrôlée de frigories.

Le broyage à basse température est poursuivi pendant environ 5 minutes (étape IV) avant une remontée naturelle de la température de l'enceinte de broyage à une température T4 proche de l'ambiante en environ 5 minutes (étape V).

Le broyage est alors stoppé et la pâte obtenue transférée dans le réservoir de stockage intermédiaire.

## Revendications

1. Procédé de fabrication de pâte de nougat,
**caractérisé par** la mise en oeuvre des étapes suivantes :
- on introduit du nougat dur éventuellement additionné d'amandes blanchies dans une enceinte de broyage, à température ambiante ;
- on soumet ce nougat à un prébroyage à température essentiellement constante jusqu'à obtention d'un mélange ayant une granulométrie homogène ;
- on laisse monter la température de l'enceinte jusqu'à 40 à 50°C tout en poursuivant le broyage de façon à obtenir une pâte de nougat ;
- on refroidit rapidement l'enceinte jusqu'à une température de l'ordre de 2 à 5°C ;
- on poursuit le broyage en maintenant une température basse jusqu'à l'obtention d'une pâte ayant la granulométrie souhaitée ; et
- on laisse la température de l'enceinte remonter à une valeur proche de l'ambiante tout en poursuivant le broyage.

2. Procédé selon la revendication 1,
**caractérisé en ce que**
après l'étape de remise de la pâte de nougat à température ambiante, on transfère celle-ci dans un broyeur à cylindres ou on lui fait subir une étape d'affinage de façon à réduire sa granulométrie.

3. Procédé selon l'une quelconque des revendications 1 et 2,
**caractérisé en ce que**
la durée du traitement dans l'enceinte de broyage est inférieure à 30 minutes et est de préférence de l'ordre de 25 minutes.

## Patentansprüche

1. Verfahren zur Herstellung von Nougatmasse, **gekennzeichnet durch** die folgenden Schritte:
- man gibt bei herrschender Raumtemperatur hartes, unter Umständen mit blanchierten Mandeln versetztes Nougat in eine geschlossene Zerkleinerungsvorrichtung;
- es erfolgt bei im Wesentlichen konstanter Temperatur eine Vorzerkleinerung dieses Nougats, bis sich eine Mischung mit einer homogenen Körnigkeit gebildet hat;
- man lässt die Temperatur der Zerkleinerungsvorrichtung bei fortwährender Zerkleinerung auf 40 bis 50°C steigen, so dass eine Nougatmasse entsteht;
- die Zerkleinerungsvorrichtung wird rasch bis auf eine Temperatur in der Größenordnung von 2 bis 5°C abgekühlt;
- das Zerkleinern wird unter Beibehaltung einer niedrigen Temperatur fortgesetzt, bis eine Masse mit der gewünschten Körnigkeit entstanden ist; und
- man lässt die Temperatur der Zerkleinerungsvorrichtung bei weiterhin stattfindender Zerkleinerung wieder bis auf einen Wert nahe der Raumtemperatur ansteigen.

2. Verfahren nach Anspruch 1,
**dadurch gekennzeichnet, dass** man die Nougatmasse nach dem Schritt des Zurückbringens auf Raumtemperatur in ein Brechwalzwerk weiterleitet, wo sie einen Verfeinerungsschritt durchläuft, so dass ihre Körnigkeit verkleinert wird.

3. Verfahren nach einem der Ansprüche 1 oder 2,
**dadurch gekennzeichnet, dass** die Behandlungsdauer in der geschlossenen Zerkleinerungsvorrichtung weniger als 30 min. beträgt und vorzugsweise eine Größenordnung von 25 min. hat.

## Claims

1. A method of making nougat paste,
**characterised by** carrying out the following steps:
- hard nougat, to which optionally blanched almonds have been added, is introduced into a grinding enclosure, at ambient temperature;
- said nougat undergoes pregrinding at a substantially constant temperature until a mixture is obtained having a homogeneous grain size distribution;
- the temperature of the enclosure is allowed to rise to 40 to 50°C while continuing the grinding so as to obtain a nougat paste;
- the enclosure is cooled rapidly to a temperature of the order of 2 to 5°C;
- the grinding is continued while maintaining a low temperature until a paste is obtained having the desired grain size distribution, and
- the temperature of the enclosure is allowed to rise again to a value close to ambient temperature, while continuing the grinding.

2. A method according to Claim 1,
**characterised in that**
after the step of returning the nougat paste to ambient temperature, it is transferred into crushing rolls in which it undergoes a refining step so as to reduce its grain size distribution.

3. A method according to either one of Claims 1 and 2,
**characterised in that**
the treatment time in the grinding enclosure is less than 30 minutes and is preferably of the order of 25 minutes.
